(19) Europäisches Patentamt
European Patent Office
Office européen des brevets

(11) **EP 1 416 744 B1**

(12) **EUROPEAN PATENT SPECIFICATION**

(45) Date of publication and mention of the grant of the patent:
**26.03.2008 Bulletin 2008/13**

(51) Int Cl.:
***H04Q 3/66*** *(2006.01)*

(21) Application number: **02024226.9**

(22) Date of filing: **31.10.2002**

(54) **Multicriterial dynamic routing in communication networks**

Dynamische Leitweglenkung mit mehreren Kriterien in Kommunikationsnetzwerken

Routage dynamique selon des critères multiples dans des réseaux de communication

(84) Designated Contracting States:
**AT BE BG CH CY CZ DE DK EE ES FI FR GB GR IE IT LI LU MC NL PT SE SK TR**

(43) Date of publication of application:
**06.05.2004 Bulletin 2004/19**

(73) Proprietor: **Kresimir, Lukac**
**8050 Zürich (CH)**

(72) Inventor: **Kresimir, Lukac**
**8050 Zürich (CH)**

(56) References cited:
• **NARENDRA K S ET AL: "APPLICATION OF LEARNING AUTOMATA TO TELEPHONE TRAFFIC ROUTING AND CONTROL" IEEE TRANSACTIONS ON SYSTEMS, MAN AND CYBERNETICS, vol. SMC-7, no. 11, November 1977 (1977-11), pages 785-792, XP000836349 ISSN: 0018-9472**
• **ABOELELA E ET AL: "Fuzzy inference system for QoS routing in B-ISDN" IEEE CANADIAN CONFERENCE ON ELECTRICAL AND COMPUTER ENGINEERING, vol. 1, 24 - 28 May 1998, pages 141-144, XP010284825 ISBN: 0-7803-4314-X**

**Description**

**Field of the Invention**

The invention relates to multicriteria routing in circuit switched telecommunication networks. Generally, the term routing describes a process by which the path between source and destination node is chosen.

**Background of the Invention**

First attempts to apply stochastic automata to the traffic routing problem have been made by Narendra, Tripathi and Mason and described in K.S. Narendra, S.S. Tripathi, L.G. Mason, "Application of learning automata to telephone traffic routing problems", Yale Univ., New Haven, Conn., Tech. Rep. CT-60, Jan. 1974. This research considered circuit switched networks in which learning automata at network nodes update their routing strategies on the basis of success or failure in completing calls.

More extensive simulation studies of simple networks by applying learning automata routing schemes are discussed in Narendra K.S. et al., "Application of learning automata to telephone routing and control", IEEE Transactions on Systems, Man and Cybernetics, vol. SMC-7, No. 11, November 1977, p. 785-792.

However, only the uni-modal routing problem in connection oriented networks has been considered so far, whereby the goal was minimization of the overall network blocking. This is mainly due to the fact that almost all of researchers have only dealt with learning behaviours of stochastic automata under single teacher environment.

However, the learning behaviour of stochastic automata under single teacher environment can not be applied to the problems where one input elicits multiresponses from an environment having multicriteria and with different interrelationships between environments.

Given the shortcomings in the prior art there is a need to solve the multicriterial routing problem that is a common problem faced by e.g. telecom operators whereby the quality and the route price with given capacities have to be taken into account.

It should be also noted that a classical fuzzy approach to the multi-metric routing problem has been discussed in E. Aboelela and C. Dougligers, "Fuzzy Inference System for QoS Routing in B-ISDN", IEEE Canadian Conference on Electrical and Computer Engineering, Vol. 1, 24-28 May 1998, p. 141-144.

**Summary of the Invention**

The object of the present invention is to overcome the disadvantages of the prior art and to provide a new type of routing solutions that will take into account the quality, the route price as well as given capacities of corresponding transmission links.

A further object of the invention is to provide an improved method of determing how good and how bad is used route in a telecommunication network in terms of the quality and the route price.

An another object of the invention is to obtain minimum network blocking and minimum route prices simultaneously thus resulting in maximum economic gain for a telecom operator.

This is extremely important in today deregulated telecommunication market allowing competition for public voice services between many alternative carriers. In a such highly competitive environment it is necessary to balance traffic volumes taking into account installed capacities, route prices and the quality of different destinations provided by different alternative suppliers. The key thing in such business is to dynamically update routing tables according present situation on the market.

A further object of the invention is to apply different routing strategies by assigning weights of importance to the quality and the price, as well as by changing the shape of respective fuzzy sets by which a routing strategy is defined.

The idea of the invention is to combine a new model of learning automata, which is the object of the invention and to apply it for call routing in each network node (i.e. switch), together with fuzzy logic that is used to model feedback response for each successful and blocked call in this invention. Generally, learning automata have ability to find global optimum while fuzzy logic enables the handling of partial truth.

**Brief Description of the Drawings**

In the following the invention is described in the more detail with reference to the examples according to appended drawings, wherein:

FIG. 1      shows an example of telecommunication network,
FIG. 2      shows an example of node structure,

FIG. 3     shows the prior art model of learning automaton interacting with the uni-modal environment,

FIG. 4     shows the novel model of learning automaton (called F learning automaton) interacting with quality and price fuzzy environments,

FIG. 5     shows an example of quality reward and penalty fuzzy set,

FIG. 6     shows an example of price reward and penalty fuzzy set,

FIG. 7     shows an example of reward fire strength,

FIG. 8     shows an example of penalty fire strength,

FIG. 9     shows a procedure for the dynamic update of the quality reward fuzzy set as well as of the quality penalty fuzzy set,

FIG. 10     shows a procedure for the dynamic update of the price reward fuzzy set as well as of the price penalty fuzzy set.

## Detailed Description of the Invention

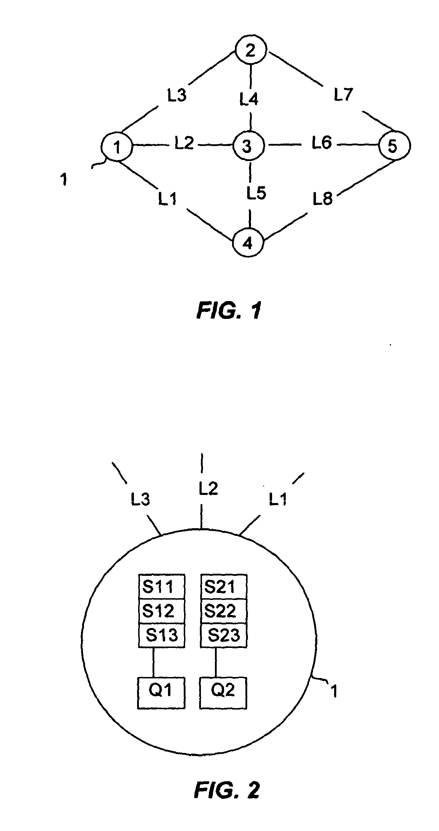

Referring to FIG. 1, there is depicted a highly schematic diagram of a telecommunication network comprising number of nodes 1 to 5 and links L1, L2, L3, L4, L5, L6, L7, L8 that provide communication paths between adjacent nodes. Each link has certain capacity indicating a number of available trunk lines (communication channels) between a pair of nodes. In addition to each link is assigned a price which has to be paid for sending a call via that link. A single trunk line may be used by only one call at a time. In the network of FIG. 1, the nodes may comprise switches or exchanges and the links may comprise trunk groups.

FIG. 2 shows the simplified structure of network node 1 of FIG. 1 having output links L1, L2 and L3. It contains queues Q1 and Q2 for two pairs of source and destination nodes shown on FIG. 1 whereby calls originated from source node 1 and destined to node 5 are stored in queue Q1 and calls originated from source node 2 and destined to node 4 are stored in queue Q2. Call routing entities called senders S11, S12, S13 process calls from queue Q1 and senders S21, S22, S23 process calls from queue Q2. The sender presents a routing algorithm which looks for a free output link and it is based on a new model of learning automaton which is the object of the invention.

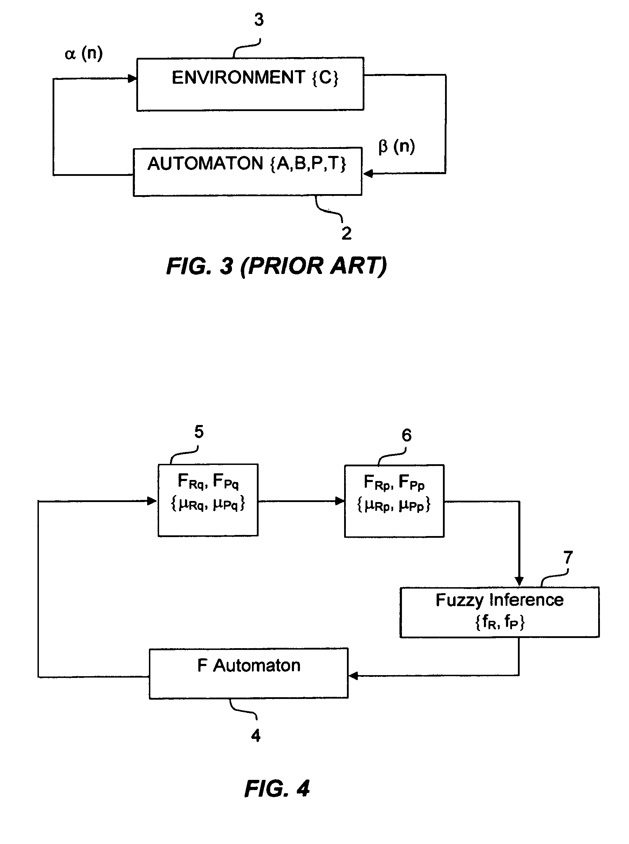

FIG. 3 shows the prior art solution comprising the model of learning automaton 2 interacting with uni-modal environment 3. Variable structure stochastic automaton 2 is a 4-tuple {A, B, P, T}. A and B are a set of actions and a set of responses respectively. In the above routing problem the set of actions is defined by a set of possible output links from the observed network node. If the set B is binary, e.g. {0, 1}, the model is known as a P-model. Therefore if a call has reached its destination $\beta = 0$ and if it is blocked $\beta = 1$. On the other hand if the set B is a finite collection of distinct symbols it is called a Q-model, and an S-model if the set B is the interval [0, 1]. T denotes a learning algorithm and operates on the probability vector $P(n) = \{p_1(n), p_2(n), ..., p_a(n)\}$ where $p_i(n) = Pr\{\alpha(n) = \alpha_i\}$ is the probability that automaton 2 will select action $\alpha_i$ at time n and index a is the number of actions. Stochastic environment 3 is defined as a 3-tuple {A, B, C}. The sets A and B are identical to those of automaton 2. The set $C = [c_1, c_2, ..., c_a]$ is the vector of penalty probabilities where $c_i(n) = Pr\{\beta(n) = 1 \mid \alpha(n) = \alpha_i\}$ is the probability that environment 3 will penalise action $\alpha_i$.

FIG. 4 describes the invention comprising a novel model of stochastic automaton called F automaton 4 interacting with quality fuzzy environment 5 and price fuzzy environment 6, wherein:

F Automaton 4 - describes a new model of learning automaton with a new reinforcement scheme for the update of action probabilities,

Quality fuzzy environment 5 - describes how good and how bad is the obtained quality,

Price fuzzy environment 6 - describes how good and how bad is the obtained route price,

Fuzzy Inference 7 - describes the inference used for the calculation of global feedback to the F automaton 4 containing two fuzzy rules: a reward fuzzy rule and a penalty fuzzy rule,

$F_{Rq}$ - denotes the quality reward fuzzy set,

$F_{Pq}$ - denotes the quality penalty fuzzy set,

$\mu_{Rq}$ - denotes a membership grade in the quality reward fuzzy set,

$\mu_{Pq}$ - denotes a membership grade in the quality penalty fuzzy set,

$F_{Rp}$ - denotes the price reward fuzzy set,

$F_{Pp}$ - denotes the price penalty fuzzy set,

$\mu_{Rp}$ - denotes a membership grade in the price reward fuzzy set,

$\mu_{Pp}$ - denotes a membership grade in the price penalty fuzzy set,

$f_R$ - denotes the fuzzy singleton resulting from the global reward fuzzy set also called reward fire strength,

$f_P$ - denotes the fuzzy singleton resulting from the global penalty fuzzy set also called penalty fire strength.

The F Automaton 4 is applied for the selection of an output link at a network node taking into account the quality and the price (i.e. the route price which is equal to the sum of links' cost on the used route). The quality for calls belonging to a specific pair of source and destination nodes is defined as:

$$quality = \frac{number\ of\ blocked\ calls}{number\ of\ successfull\ calls + number\ of\ blocked\ calls} \qquad Eq.\ (1)$$

The idea of the invention is to model quality data as the fuzzy environment 5 and route price data as the fuzzy environment 6 which are connected with fuzzy AND and/or OR connectives comprising the following steps for each pair of source and destination nodes:

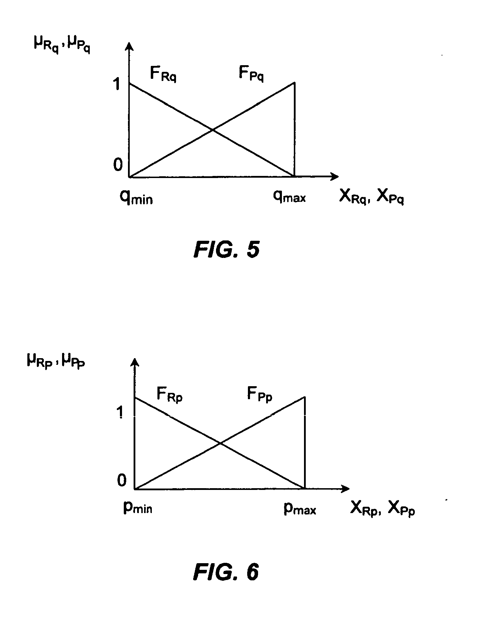

1. Define the quality reward fuzzy set. FIG. 5 shows an example of the quality reward fuzzy set, wherein:

$X_{Rq}$ - denotes the universe of discourse containing elements of the quality reward fuzzy set,
$F_{Rq}$ - denotes the quality reward fuzzy set; the shape of the fuzzy set is not limited to the triangular form; for example fuzzy hedges could be applied as well;
$\mu_{Rq}$ - denotes a membership grade in the quality reward fuzzy set,
$q_{min}$ - denotes the minimum quality contained in $X_{Rq}$; the initial value is $q_{min}= 0$,
$q_{max}$ - denotes the maximum quality contained in $X_{Rq}$; the initial value is $q_{max}= 100$.

This gives an answer to the question: If the obtained quality is good - how good is it? This is specified by the quality fuzzy environment 5 response $\mu_{R_q} \in [0, 1]$, where 1 denotes the maximum possible reward.

2. Define the quality penalty fuzzy set which describes a distance of the resulting crisp quality from the quality reward fuzzy set. FIG. 5 shows an example of the quality penalty fuzzy set as well, wherein:

$X_{Pq}$ - denotes the universe of discourse containing elements of the quality penalty fuzzy set;
$F_{Pq}$ - denotes the quality penalty fuzzy set; the shape of the fuzzy set is not limited to the triangular form; for example fuzzy hedges could be applied as well;
$\mu_{Pq}$ - denotes a membership grade in the quality penalty fuzzy set.

The distance of the resulting quality is defined as:

$$D\,(x_q,\ F_{Rq}) = \left| x_q - y_q \right|$$

whereby $F_{Rq}$ denotes the quality reward fuzzy set, and $y_q$ is the quality from $F_{Rq}$ for which $\mu_{Rq}(y_q)=1$, and $x_q$ is the resulting crisp quality. $y_q$ is uniquely determined due to the definition of the normalized fuzzy set $F_{Rq}$. This gives an answer to the question: If the obtained quality is bad - how bad is it? This is specified by the quality fuzzy environment 5 response $\mu_{P_q} \in [0, 1]$, where 1 denotes the maximum possible penalty.

3. Define the price reward fuzzy set. FIG. 6 shows an example of the price reward fuzzy set, wherein:

$X_{Rp}$ - denotes the universe of discourse containing elements of the price reward fuzzy set,
$F_{Rp}$ - denotes the price reward fuzzy set; the shape of the fuzzy set is not limited to the triangular form; for example fuzzy hedges could be applied as well;
$\mu_{Rp}$ - denotes a membership grade in the price reward fuzzy set,
$p_{min}$ - denotes the minimum price contained in $X_{Rp}$,
$p_{max}$ - denotes the maximum price contained in $X_{Rp}$.

This gives an answer to the question: If the route price is good - how good is it? This is specified by the price environment 6 response $\mu_{R_p} \in [0, 1]$, where 1 denotes the maximum possible reward.

4. Define the price penalty fuzzy set which describes a distance of the resulting crisp route price from the price reward fuzzy set. FIG. 6 shows an example of the price penalty fuzzy set as well, wherein:

$X_{Pp}$ - denotes the universe of discourse containing elements of the price penalty fuzzy set,
$F_{Pp}$ - denotes the penalty price fuzzy set; the shape of the fuzzy set is not limited to the triangular form; for example fuzzy hedges could be applied as well;
$\mu_{Pp}$ - denotes a membership grade in the price penalty fuzzy set.

The distance of the resulting price is defined as:

$$D\,(x_p,\ F_{Rp}) = \left|\,x_p - y_p\,\right|$$

whereby $F_{Rp}$ denotes the price reward fuzzy set, and $y_p$ is such a price from $F_{Rp}$ for which $\mu_{Rp}(y_p)=1$, and $x_p$ is the obtained crisp route price. This gives an answer to the question: If the route price is bad - how bad is it? This is specified by the price environment 6 response $\mu_{Pp} \in [0,\ 1]$, where 1 denotes the maximum possible penalty.

5. If the quality reward environment 5 and the price reward environment 6 are connected as $\mu_{Rq}$ AND $\mu_{Rp}$ then the respective quality penalty environment 5 and the price penalty environment 6 are oppositly connected i.e. as $\mu_{Pq}$ OR $\mu_{Pp}$.

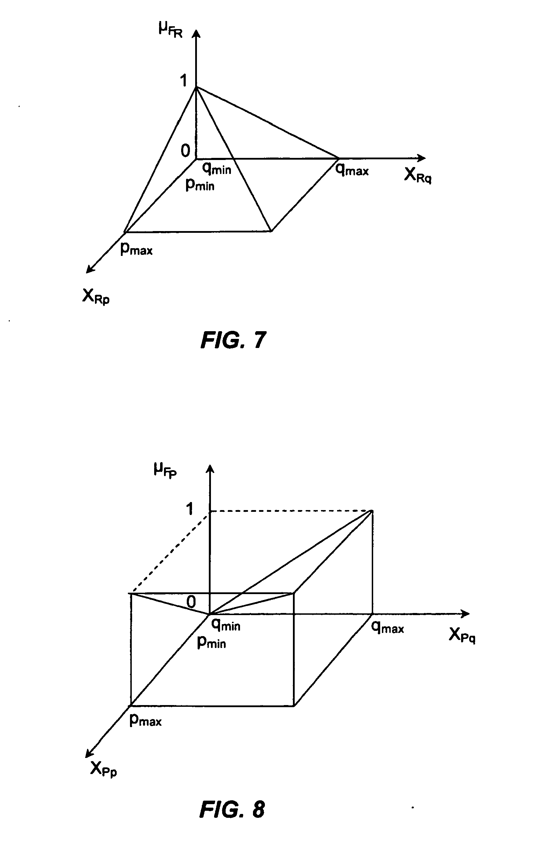

6. Define the resulting reward fuzzy rule. FIG. 7 shows an example of the reward fire strength resulting from the AND fuzzy connective implemented by the min t-norm for the quality reward fuzzy set $F_{Rq}$ and the price reward fuzzy set $F_{Rp}$ shown on FIG 5. and FIG. 6, wherein:

$X_{Rq}$ - denotes the universe of discourse containing elements of the quality reward fuzzy set,
$X_{Rp}$ - denotes the universe of discourse containing elements of the price reward fuzzy set,
$\mu_{F_R}$ - denotes the membership grade of the resulting global reward,
$q_{min}$ - denotes the minimum quality for a specific pair of source and destination nodes,
$q_{max}$ - denotes the maximum quality for a specific pair of source and destination nodes,
$p_{min}$ - denotes the minimum route price for a specific pair of source and destination nodes,
$p_{max}$ - denotes the maximum route price for a specific pair of source and destination nodes.

Another known t-norm operators can be used as well.
The resulting reward fuzzy rule is defined as:

IF $X_{Rq} = F_{Rq}$ AND $X_{Rp} = F_{Rp}$ THEN $F_R$

where $F_R$ is the global reward fuzzy set (also called reward fire strength) corresponding to the fuzzy singleton $f_R$ resulting from the antecedent part of the rule.

7. Define the resulting penalty fuzzy rule. FIG. 8 shows the penalty fire strength resulting from the OR fuzzy connective implemented by the max s-norm for the quality penalty fuzzy set $F_{Pq}$ and the price penalty fuzzy set $F_{Pp}$ shown on FIG. 5 and FIG. 6, wherein:

$X_{Pq}$ - denotes the universe of discourse containing elements of the quality penalty fuzzy set,
$X_{Pp}$ - denotes the universe of discourse containing elements of the price penalty fuzzy set,
$\mu_{F_P}$ - denotes the membership grade of the resulting global penalty,
$q_{min}$ - denotes the minimum quality for a specific pair of source and destination nodes,
$q_{max}$ - denotes the maximum quality for a specific pair of source and destination nodes,
$p_{min}$ - denotes the minimum route price for a specific pair of source and destination nodes,
$p_{max}$ - denotes the maximum route price for a specific pair of source and destination nodes.

Another known s-norm operators can be used as well.
The resulting penalty fuzzy rule is defined as:

IF $X_{Pq} = F_{Pq}$ AND $X_{Pp} = F_{Pp}$ THEN $F_P$

where $F_P$ is the global penalty fuzzy set (also called penalty fire strength) corresponding to the fuzzy singleton $f_P$ resulting from the antecedent part of the rule.

8. The response of the above multiteacher environment to a specific action of the F automaton 4 is described with two parameters $f_R$ and $f_P$ as shown on FIG. 4. The said fire strengths are provided to each sender along the route used by a specific call. If $f_R > 0$ and $f_P > 0$ it means that the selected action is neither totally favorable nor totally unfavorable. In this multiteacher environment the relationship between the reward fire strength and the penalty fire strength $f_R = 1 - f_P$ does not have to be valid. The Lukasiewicz $L_1$ logic is a special case of such logic and can be obtained for $f_R = 1 - f_P$.

Another idea of the inovation is the definition of different routing strategies by assigning weights to the quality and price metrics to an incoming call and considering these later on in the calculation of the resulting reward/penalty fire strength as an input to the F automaton 4. The Yager approach to a general fuzzy aggregation problem has been applied. This approach is described in R.R. Yager, "On weighted median aggregation", International Journal of Uncertainty, Fuzziness and Knowledge-based Systems, 1, 1994, p. 101-113.

Assume that weights $w_q \in [0, 1]$ and $w_p \in [0, 1]$ indicating the importance of the quality and the price in the calculation of the reward/penalty fire strength are assigned to the quality fuzzy environment 5 and the price fuzzy environment 6 which are described with fuzzy sets $F_{Rq}$, $F_{Pq}$, $F_{Rp}$ and $F_{Pp}$. Let Agg indicate an aggregation operator, max or min. First each of the membership grades $\mu_i$ is transformed using the weights $g(w_i, \mu_i) = \mu_i'$ for i = Rq, Pq, Rp, Pp obtaining the weighted aggregate Agg $(\mu_{Rq}', \mu_{Pq}', \mu_{Rp}', \mu_{Pp}')$. The form of g depends upon the type of aggregation being performed. For the inclusion of importance in the min aggregation the following class of functions is used $g(w_i, \mu_i) = S(1 - w_i, \mu_i)$, i = Rq, Rp where S is a s-norm obtaining the weighted aggregate min $\{\mu_{Rq}', \mu_{Rp}'\} = $ min $\{S(1 - w_q, \mu_{Rq}), S(1 - w_p, \mu_{Rp})\}$. Similar can be derived for the max aggregation operator: $g(w_i, \mu_i) = T(w_i, \mu_i)$, i = Pq, Pp where T is a t-norm.

The concept above leads to the formal definition of the new algorithm for updating probabilities at stage n of the F automaton 4:

$$p_i(n+1) = p_i(n) + f_R \sum_{j=1, j \neq i}^{a} g_j(p(n)) - f_P \sum_{j=1, j \neq i}^{a} h_j(p(n)), \qquad \text{if } \alpha(n) = \alpha_i$$

$$p_j(n+1) = p_j(n) - f_R \, g_j(p(n)) + f_P \, h_j(p(n)), \qquad \text{if } j \neq i \qquad\qquad \text{Eq. (2)}$$

where

a - denotes the number of actions at stage n,
$\alpha(n)$ - denotes the set of actions $\alpha(n) = \{\alpha_1, ..., \alpha_a\}$,
i, j - denotes the action index,
pi(n) - denotes the probability of action $\alpha_i$ at stage n,
pj(n) - denotes the probability of action $\alpha_j$ at stage n,
pi(n+1) - denotes the probability of action $\alpha_i$ at stage n+1,
pj(n+1) - denotes the probability of action $\alpha_j$ at stage n+1,
$f_R$ - denotes the reward fire strength,
$f_P$ - denotes the penalty fire strength whereby the relationship $f_R = 1 - f_P$ does not have to be valid,
gj(p(n)) - denotes the reward function for action $\alpha_j$,
hj(p(n)) - denotes the penalty function for action $\alpha_j$.

The new model presents a generalization of all known automata types as well.

By substituting $g_j(p) = \alpha \, p_j(n)$ and $h_j(p) = \alpha / (a-1) - \alpha \, p_j(n)$ in Eq. (2) whereby the choice of $g_j(p)$ and $h_j(p)$ is not limited to the given supstitutes and where a is the reward as well as penalty parameter and $0 < \alpha < 1$, the updating algorithm of the F automaton 4 can be written as follows:

$$p_i(n+1) = p_i(n) + f_R^i\, a\,(1 - p_i(n)) - f_P^i\, a\, p_i(n), \qquad\qquad \text{if } \alpha(n) = \alpha_i$$

$$p_j(n+1) = p_j(n) - f_R^i\, a\, p_j(n) + f_P^i\left[a\,/\,(a-1) - a\, p_j(n)\right], \qquad \text{if } j \neq i \qquad\qquad \text{Eq. (3)}$$

The symbols used have the same meaning as described in Eq. (2).

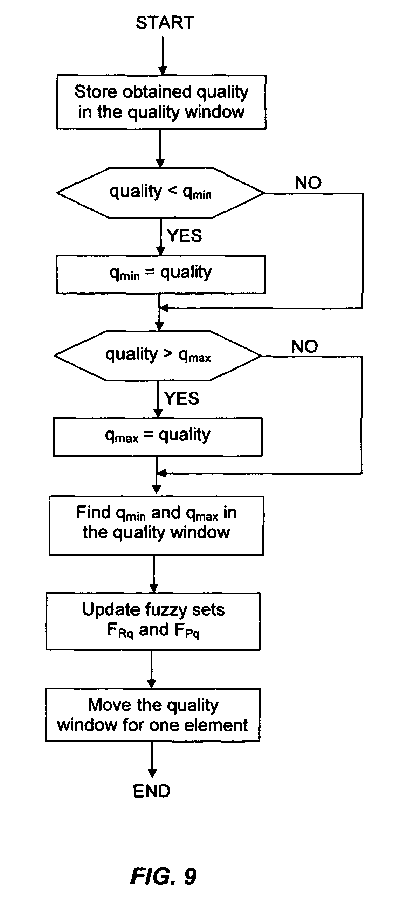

Another idea of the invention is to dynamically adapt quality and price fuzzy sets $F_{Rq}$, $F_{Pq}$, $F_{Rp}$ and $F_{Pp}$ by using a quality and price observation window. The quality window comprises obtained quality for a predefined number of successive calls. FIG. 9 describes a procedure for updating quality fuzzy sets $F_{Rq}$ and $F_{Pq}$ at stage n. For a successful or blocked call the resulting quality is calculated using Eq. (1) and stored in the quality window. After that it is checked whether the obtained quality is less than present $q_{min}$. If it is true the obtained quality is assigned to $q_{min}$. It is also checked whether the obtained quality is greater than present $q_{max}$. If it is true the obtained quality is assigned to $q_{max}$. After that it is searched for the minimum quality $q_{min}$ in the quality window as well as for the maximum quality $q_{max}$ in the quality window in order to update fuzzy sets $F_{Rq}$ and $F_{Pq}$ and calculate $\mu_{Rq}$ and $\mu_{Pq}$. The last step is to move the quality window for one element i.e. the oldest element contained in the quality window is removed and all other elements are shifted for one place back.

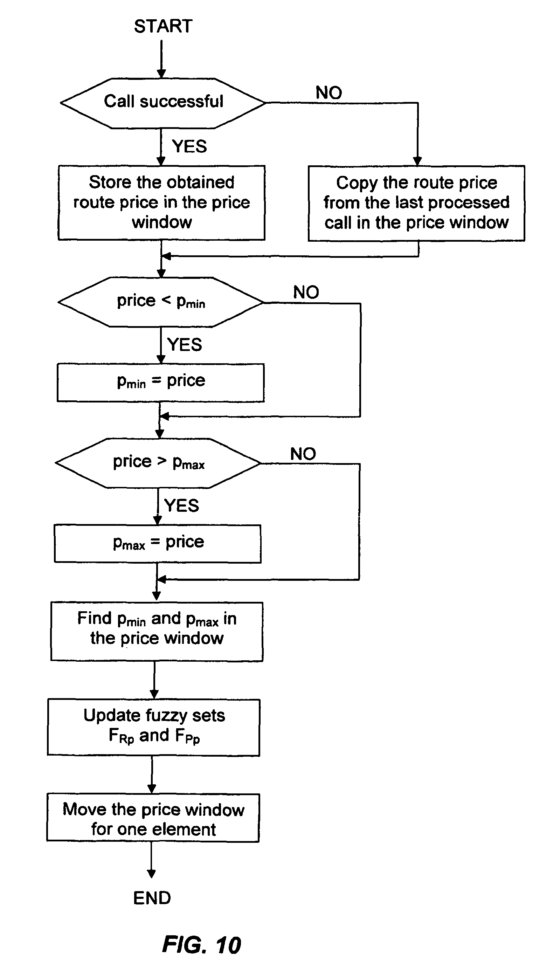

A similiar procedure is used for the elements of the price fuzzy sets. FIG. 10 describes the procedure for updating price fuzzy sets $F_{Rp}$ and $F_{Pp}$ at stage n. The only difference is that first it is checked if a call is successful. If it is true, the obtained price (i.e. the route price) is stored in the price window. If not, the price obtained from the last processed call is copied and stored in the price window. After that it is checked if the obtained price is less than present $p_{min}$. If it is true the obtained price is assigned to $p_{min}$. It is also checked if the obtained price is greater than present $p_{max}$. If it is true, the obtained price is assigned to $p_{max}$. After that it is searched for the minimum price $p_{min}$ in the price window as well as for the maximum price $p_{max}$ in the price window in order to update fuzzy sets $F_{Rp}$ and $F_{Pp}$ and calculate $\mu_{Rp}$ and $\mu_{Pp}$. The last step is to move the price window for one element i.e. the oldest element contained in the price window is removed and all other elements are shifted for one place back.

Now we will describe a simplified routing process at a network node containing senders defined as F automaton 4. All new calls are put into queues of their source nodes while looking for a free sender. If there is a sender available a call occupies it. After that the sender looks for a free output link in the order determined by probabilities assigned to each link i.e. first it is attempted to send the call via the link with the highest probability, after that via the link with the second highest probability and so on. If a free link is found, the call occupies it and travels to the next node. If there is a free sender at the next node the call occupies it, and if not, it goes to the queue. Once the call reaches its destination node the occupied trunk lines are kept busy for the call duration. Whenever a call is blocked in the network all senders and trunk lines being used by that call are immediately released.

In case of a successful or blocked call, the reward and penalty probabilities of the links used by that call in all F automata 4 along the route are updated according to the output of the Fuzzy Inference 7 by applying the new routing algorithm defined by Eq. (2) and Eq. (3).

The goal of the routing strategy defined with the fuzzy sets shown on FIG. 5 and FIG. 6 is to obtain the minimum network blocking and the minimum route price simultaneously. However, a choice of routing strategies is not limited. For example a routing strategy can be defined to minimize network blocking and disregard the price by assigning weights $w_q = 1.0$ and $w_p = 0.0$. Another routing startegy could be to disregard the quality and minimize the price by assigning weights $w_q = 0.0$ and $w_p = 1.0$. Other routing startegy could be defined by assigning weights $w_q = 1.0$ and $w_p = 0.5$ and so on. By changing the shape of the quality reward fuzzy set, the quality penalty fuzzy set, the price reward fuzzy set and the price penalty fuzzy set different routing strategies are obtained as well.

**Claims**

1.   A telecommunication system for implementing a circuit switched telecommunication network comprising a plurality of network nodes interconnected by communication links, each said link having a price and a predetermined capacity incorporating one or more communication channels and further comprising call routing entities, hereafter referred as senders, based on the concept of learning automata at each network node whereby routing metrics are defined in terms of fuzzy membership functions and feedback information for each successful or blocked call is given on the basis of fuzzy rules, **characterized in that**
said senders comprise means for the determination of a link selection order at a network node for sending a call toward its destination node;
weights in the range of [0,1] are assigned to the quality and price metric;

two fuzzy membership functions are defined for each said metric describing how good and how bad is obtained the said metric whereby the said quality metric is defined as a ratio of the number of blocked and the total number of calls and the cost metric as the sum of links' costs on a selected path;

said system comprises means for providing feedback information, based on the said fuzzy membership functions, for each successful or blocked call to each sender on the route which has processed that particular call.

2. A system according to claim 1, wherein the reinforcement scheme of the said learning automaton is implemented in said senders.

3. A system according to claims 1 and 2, wherein said feedback information comprises two fuzzy singletons as inputs to the said learning automaton describing how good and how bad said quality and price metrics are obtained considering their weights as well.

4. A method for routing calls in a circuit switched telecommunication network comprising a plurality of network nodes interconnected by communication links, each said link having a price and a predetermined capacity incorporating one or more communication channels and further comprising senders based on the concept of learning automata at each network node, whereby routing metrics are defined in terms of fuzzy membership functions and feedback information for each successful or blocked call is given on the basis of fuzzy rules, **characterized by** comprising steps of

   - assigning weights in the range of [0,1] to the quality and price metrics;
   - determination of the new type of learning automaton by defining a new reinforcement scheme for updating action probabilities of the said learning automaton in order to determine a link selection order at a network node for sending a call toward its destination node;
   - definition of two fuzzy membership functions for the quality and cost metric describing how good and how bad the said metric is obtained, whereby the said quality metric is defined as the ratio of the number of blocked and total number of calls, and the cost metric as the sum of links' costs on the selected path;
   - determination of a fuzzy rule, whereby the antedescent parts of the said fuzzy rule are said metrics, described with the membership functions, describing how good said metrics are obtained, and respective weights, connected with the AND fuzzy connective, whereby the consequent part of the said fuzzy rule is hereafter referred to as the reward fire strength;
   - determination of a fuzzy rule, whereby the antedescent parts of the said fuzzy rule are said metrics, described with the membership functions, describing how bad said metrics are obtained, and respective weights, connected with the OR fuzzy connective, whereby the consequent part of the said fuzzy rule is hereafter referred to as the penalty fire strength;
   - determination of the fire strengths of the said fuzzy rules by considering the antedescent parts of the said fuzzy rules;
   - providing said fire strengths to each said sender along the route used by a specific call;
   - dynamic adaptation of the said fuzzy sets for each successful or blocked call of the said learning automaton.

5. The method according to claim 4 **characterized by** updating probabilities at each sender realized by F learning automaton 4 using the formula:

$$p_i(n+1) = p_i(n) + f_R \sum_{j=1, j \neq i}^{a} g_j(p(n)) - f_P \sum_{j=1, j \neq i}^{a} h_j(p(n)), \qquad \text{if } \alpha(n) = \alpha_i$$

$$p_j(n+1) = p_j(n) - f_R \, g_j(p(n)) + f_P \, h_j(p(n)), \qquad \text{if } j \neq i$$

where

   a - denotes the number of actions at stage n,
   $\alpha(n)$ - denotes the set of actions $\alpha(n) = \{\alpha_1, ..., \alpha_a\}$,
   i, j - denotes the action index,
   $p_i(n)$ - denotes the probability of action $\alpha_i$ at stage n,
   $p_j(n)$ - denotes the probability of action $\alpha_j$ at stage n,

$p_i(n+1)$ - denotes the probability of action $\alpha_i$ at stage n+1,
$p_j(n+1)$ - denotes the probability of action $\alpha_j$ at stage n+1,
$f_R$ - denotes the reward fire strength,
$f_P$ - denotes the penalty fire strength whereby the relationship $f_R = 1 - f_P$ does not have to be valid,
$g_j(p(n))$ - denotes a reward function for action $\alpha_j$,
$h_j(p(n))$ - denotes a penalty function for action $\alpha_j$.

**6.** The method according to claim 4, wherein the said dynamic adaptation of the said fuzzy membership functions for each successful or blocked call of the said learning automaton, comprise steps of:

- storing the obtained quality in the quality window,
- checking if the obtained quality is less than the current minimum quality $q_{min}$ and assigning the obtained quality to $q_{min}$ if it is true,
- checking if the obtained quality is greater than the current maximum quality $q_{max}$ and assigning the obtained quality to $q_{max}$ if it is true,
- searching for the minimum quality $q_{min}$ in the quality window,
- searching for the maximum quality $q_{max}$ in the quality window,
- adapting the shape of the said quality fuzzy membership functions on the basis of obtained $q_{min}$ and $q_{max}$,
- moving the quality window for one element i.e. the oldest element contained in the quality window is removed and all other elements are shifted for one place back,
- storing the route price if the call is successful in the price window,
- coping the route price from the last processed call to the price window if the call is blocked,
- checking if the obtained price is less than the current minimum price $p_{min}$ and assigning the obtained price to $p_{min}$ if it is true,
- checking if the obtained price is greater than the current maximum price $p_{max}$ and assigning the obtained price to $p_{max}$ if it is true,
- searching for the minimum price $p_{min}$ in the price window,
- searching for the maximum price $p_{max}$ in the price window,
- adapting the shape of the said price fuzzy membership functions on the basis of the obtained $p_{min}$ and $p_{max}$,
- moving the price window for one element i.e. the oldest element contained in the window is removed and all other elements are shifted for one place back.

**Patentansprüche**

**1.** Telekommunikationssystem für die Umsetzung eines leitungsvermittelten Netzes, das eine Mehrzahl von Netzknoten enthält, die durch Kommunikationslinks verbunden sind, jeder besagte Link einen Preis und eine vorbestimmte Kapazität hat, die einen oder mehrere Kommunikationskanäle enthält, und weiter in jedem Netzknoten Routing-Entitäten enthält nachher Sender genannt, die auf dem Konzept der lernfähigen Automaten basiert sind, wobei Routing-Metriken in Form von Fuzzy-Zugehörigkeitsfunktionen definiert sind, und die Rückmeldung-Information aufgrund der Fuzzy-Regeln für jeden erfolgreichen oder blockierten Anruf gegeben wird, **dadurch gekennzeichnet, dass**
besagte Sender die Mittel für die Bestimmung der Reihenfolge der Leitungsauswahl in einem Netzknoten enthält um einen Anruf nach Zielknoten zu senden;
Gewichte im Bereich [0,1] zu der Qualitäts- und Preismetrik zugewiesen sind;
zwei Fuzzy-Zugehörigkeitsfunktionen für jede besagte Metrik definiert sind und die beschreiben wie gut und wie schlecht jede besagte Metrik erreicht ist, wobei die besagte Qualitätsmetrik als ein Verhältnis zwischen der Anzahl der blockierten Anrufen und der Gesamtzahl der Anrufen definiert ist, und die Preismetrik als die Summe der Linkskosten des benutzten Weges definiert ist;
besagtes System die Mittel für die Bereitstellung der Rückmeldung-Information, basiert auf den besagten Fuzzy-Zugehörigkeitsfunktionen, für jeden erfolgreichen oder blockierten Anruf zu jedem Sender auf dem Weg, der diesen bestimmten Anruf abgewickelt hat, enthält.

**2.** System nach Anspruch 1, wobei das Verstärkungsschema des besagten lernfähigen Automaten in den besagten Sendern implementiert ist.

**3.** System nach Ansprüchen 1 und 2, wobei die besagte Rückmeldung-Information zwei Fuzzy-Singletons als Eingänge zum besagten lernfähigen Automat enthält, die beschreiben wie gut und wie schlecht die besagte Qualitäts- und Preismetrik, betrachtend ebenso ihre Gewichte, erreicht ist.

4. Verfahren für das Routing der Anrufe in einem leitungsvermittelten Netz, das eine Mehrzahl von Netzknoten enthält, die durch Kommunikationslinks verbunden sind, jeder besagte Link einen Preis und eine vorbestimmte Kapazität hat, die einen oder mehrere Kommunikationskanäle enthält, und weiter in jedem Netzknoten die Sender enthält, die auf dem Konzept der lernfähigen Automaten basiert sind, wobei Routing-Metriken in Form von Fuzzy-Zugehörigkeitsfunktionen definiert sind, und die Rückmeldung-Information aufgrund der Fuzzy-Regeln für jeden erfolgreichen oder blockierten Anruf gegeben wird, **dadurch gekennzeichnet, dass** die folgende Schritte enthalten sind:

- Zuweisung der Gewichte im Bereich [0,1] zu der Qualitäts- und Preismetrik;
- Bestimmung der neuen Art des lernfähigen Automaten durch das Definieren eines neuen Verstärkungsschemas für die Aktualisierung der Wahrscheinlichkeiten der Aktionen des besagten lernfähigen Automaten um die Reihenfolge der Leitungsauswahl in einem Netzknoten zu bestimmen, damit man einen Anruf nach Zielknoten senden kann;
- Definieren von zwei Fuzzy-Zugehörigkeitsfunktionen für die Qualitäts- und Preismetrik, die beschreiben wie gut und wie schlecht die besagte Metrik erreicht ist, wobei die besagte Qualitätsmetrik als ein Verhältnis zwischen der Anzahl der blockierten Anrufen und der Gesamtzahl der Anrufen definiert ist, und die PreisMetrik als die Summe der Linkskosten des benutzten Weges definiert ist;
- Bestimmung einer Fuzzy-Regel, wobei der Bedingungsteil der besagten Fuzzy-Regel die besagten Metriken sind, die mit den Fuzzy-Zugehörigkeitsfunktionen, die zeigen wie gut die besagten Metriken erreicht sind, und mit entsprechenden Gewichten beschrieben sind, verbunden mit dem UND Fuzzy-Konnektor, wobei der Schlussfolgerungsteil der besagten Fuzzy-Regel nachher als der Aktivationsgrad der Belohnung gennant wird;
- Bestimmung einer Fuzzy-Regel, wobei der Bedingungsteil der besagten Fuzzy-Regel die besagten Metriken sind, die mit den Fuzzy-Zugehörigkeitsfunktionen, die zeigen wie schlecht die besagten Metriken erreicht sind, und mit entsprechenden Gewichten beschrieben sind, verbunden mit dem ODER Fuzzy-Konnektor, wobei der Schlussfolgerungsteil der besagten Fuzzy-Regel nachher als der Aktivationsgrad der Bestrafung gennant wird;
- Bestimmung der Aktivationsgrade der besagten Fuzzy-Regeln durch das Betrachten der Bedingungsteile der besagten Fuzzy-Regeln;
- Bereitstellung der besagten Aktivationsgrade zu jedem Sender, der durch einen spezifischen Anruf entlang des Weges benutzt wurde;
- dynamische Anpassung der besagten Fuzzy-Sets für jeden erfolgreichen oder blockierten Anruf des besagten lernfähigen Automaten.

5. Verfahren nach Anspruch 4, **dadurch gekennzeichnet, dass** die Aktualisierung der Wahrscheinlichkeiten in jeden Sender realisiert durch den F lernfähigen Automat 4 unter Verwendung der folgenden Formel gemacht wird:

$$p_i(n+1) = p_i(n) + f_R \sum_{j=1, j\neq i}^{a} g_j(p(n)) - f_P \sum_{j=1, j\neq i}^{a} h_j(p(n)), \qquad \text{für } \alpha(n) = \alpha_i$$

$$p_j(n+1) = p_j(n) - f_R \, g_j(p(n)) + f_P \, h_j(p(n)), \qquad \text{für } j \neq i$$

wobei

a - die Anzahl der Aktionen im Stadium n bezeichnet,
$\alpha(n)$ - das Set der Aktionen $\alpha(n) = \{\alpha_1, ..., \alpha_a\}$ bezeichnet,
i, j - der Index einer Aktion bezeichnet,
$p_i(n)$ - die Wahrscheinlichkeit der Aktion $\alpha_i$ im Stadium n bezeichnet,
$p_j(n)$ - die Wahrscheinlichkeit der Aktion $\alpha_j$ im Stadium n bezeichnet,
$p_i(n+1)$ - die Wahrscheinlichkeit der Aktion $\alpha_i$ im Stadium n+1 bezeichnet,
$p_j(n+1)$ - die Wahrscheinlichkeit der Aktion $\alpha_j$ im Stadium n+1 bezeichnet,
$f_R$ - der Aktivationsgrad der Belohnung bezeichnet,
$f_P$ - der Aktivationsgrad der Bestrafung bezeichnet, wobei die Relation $f_R = 1 - f_P$ nicht gültig sein soll,
$g_j(p(n))$ - eine Belohnungsfunktion für Aktion $\alpha_j$ bezeichnet,
$h_j(p(n))$ - eine Bestrafungsfunktion für Aktion $\alpha_j$ Bezeichnet.

# EP 1 416 744 B1

6. Verfahren nach Anspruch 4, wobei die besagte dynamische Anpassung der besagten Fuzzy-Zugehörigkeitsfunktionen für jeden erfolgreichen oder blockierten Anruf des besagten lernfähigen Automaten, die folgenden Schritte enthält:

- Speicherung der erreichten Qualität im Qualitätsfenster,
- Überprüfung, ob die erreichte Qualität kleiner als die gegenwärtige minimale Qualität $q_{min}$ ist, und falls das richtig ist, die Zuweisung der erreichten Qualität zu $q_{min}$,
- Überprüfung, ob die erreichte Qualität grosser als die gegenwärtige maximale Qualität $q_{max}$ ist, und falls das richtig ist, die Zuweisung der erreichten Qualität zu $q_{max}$,
- Suchen nach der minimalen Qualität $q_{min}$ im Qualitätsfenster,
- Suchen nach der maximalen Qualität $q_{max}$ im Qualitätsfenster,
- Anpassung der Form der besagten Fuzzy-Zugehörigkeitsfunktionen der Qualität aufgrund erreichter $q_{min}$ und $q_{max}$,
- Verschiebung des Qualitätsfensters für ein Element, d.h. das älteste Element, das im Qualitätsfenster enthält ist, wird entfernt, und alle weiteren Elemente werden für einen Platz zurück verschoben,
- Speicherung des Wegpreises im Preisfenster, wenn der Anruf erfolgreich ist,
- Kopierung des Wegpreises des letzten verarbeiteten Anrufes zum Preisfenster, wenn der Anruf blockiert ist,
- Überprüfung, ob der erreichte Preis kleiner als der gegenwärtige Mindestpreis $p_{min}$ ist, und falls das richtig ist, die Zuweisung des erreichten Preises zu $p_{min}$,
- Überprüfung, ob der erreichte Preis grosser als der gegenwärtige maximale Preis $p_{max}$ ist, und falls das richtig ist, die Zuweisung des erreichten Preises zu $p_{max}$,
- Suchen nach dem minimalen Preis $p_{min}$ im Preisfenster,
- Suchen nach dem maximalen Preis $p_{max}$ im Preisfenster,
- Anpassung der Form der besagten Fuzzy-Zugehörigkeitsfunktionen des Preises aufgrund erreichtes $p_{min}$ und $p_{max}$,
- Verschiebung des Preisfensters für ein Element, d.h. das älteste Element, das im Preisfenster enthält ist, wird entfernt, und alle weiteren Elemente werden für einen Platz zurück verschoben.

## Revendications

1. Système de télécommunication pour l'implémentation d'un réseau de télécommunication à commutation de circuits qui comprend la pluralité des noeuds de réseau interconnectés par des liens de communication, chaque ledit lien ayant un prix et une capacité préalablement déterminée qui comprend un ou plus canaux de communication, et par suite comprenant les moyens de routage des appels qui ci-après appelés les émetteurs basés sur le concept des automates d'apprentissage dans chaque noeud de réseau, les métriques de routage étant définies en terms des fonctions d'appartenance floues, et l'information de réaction pour chaque appel réussi ou bloqué étant donnée à base des règles floues, **caractérisé en ce que**:

lesdits émetteurs comprennent les moyens de détermination du choix de l'ordre des liens dans le noeud de réseau pour envoyer un appel vers le noeud destinataire;
des poids dans l'intervalle [0,1] sont attribués à la métrique de qualité et de prix;
deux fonctions d'appartenance floues sont définies pour chaque ladite métrique décrivant dans quelle mesure ladite métrique obtenue est bonne ou mauvaise, ladite métrique de qualité étant définie comme la proportion de nombre des appels bloqués et de nombre total des appels, et la métrique de prix comme la somme des coûts des liens sur le chemin choisi;
ledit système comprend les moyens pour fournir l'information de réaction, basée sur lesdites fonctions d'appartenance floues pour chaque appel réussi ou bloqué, à chaque émetteur qui a traité cet appel particulier le long de la route.

2. Système selon la revendication 1, dans lequel le schéma de renforcement dudit automate d'apprentissage est implémenté dans lesdits émetteurs.

3. Système selon revendications 1 et 2, dans lequel ladite information de réaction comprend deux singletons flous comme les entrées en ledit automate d'apprentissage décrivant dans quelle mesure la métrique obtenue de qualité et de prix est bonne ou mauvaise en considérant également leurs poids.

4. Procédé de routage des appels dans un réseau de télécommunication à commutation de circuits qui comprend la pluralité des noeuds de réseau interconnectés par des liens de communication, chaque ledit lien ayant un prix et une capacité préalablement déterminée qui comprend un ou plus canaux de communication, et par suite comprenant les émetteurs basés sur le concept des automates d'apprentissage dans chaque noeud de réseau, les métriques de routage étant définies en terms des fonctions d'appartenance floues, et l'information de réaction pour chaque appel réussi ou bloqué étant donnée à base des règles floues, **caractérisé en ce qu'**il inclut les étapes suivantes

- attribution des poids dans l'intervalle [0,1] à la métrique de qualité et de prix;
- détermination de nouveau type de l'automate d'apprentissage en définissant le nouveau schéma de renforcement pour mettre à jour les possibilités des actions dudit automate d'apprentissage pour déterminer le choix de l'ordre des liens sur un noeud de réseau pour envoyer un appel vers le noeud destinataire;
- définition de deux fonctions d'appartenance floues pour la métrique de qualité et de prix décrivant dans quelle mesure ladite métrique obtenue est bonne ou mauvaise, ladite métrique de qualité étant définie comme la proportion de nombre des appels bloqués et de nombre total des appels, et la métrique de prix comme la somme des coûts des liens sur le chemin choisi;
- détermination d'une règle floue, les parties antécédentes de ladite règle étant lesdites métriques, décrites par les fonctions d'appartenance, décrivant dans quelle mesure lesdites métriques obtenues sont bonnes, et correspondant poids, étant connectées par le connecteur flou ET, la partie conséquente de ladite règle floue étant appelée ci-après le degré d'activation de récompense;
- détermination d'une règle floue, les parties antécédentes de ladite règle étant lesdites métriques, décrites par les fonctions d'appartenance, décrivant dans quelle mesure lesdites métriques obtenues sont mauvaises, et correspondant poids, étant connectées par le connecteur floue OU, la partie conséquente de ladite règle floue étant appelée ci-après le degré d'activation de pénalité;
- détermination des degrés d'activation desdites règles en considérant les parties antécédentes de ladite règle floue;
- fourniment desdits degrés d'activation à chaque ledit émetteur qui a traité un appel particulier le long de la route;
- adaptation dynamique desdits ensembles flous pour chaque appel réussi ou bloqué dudit automate d'apprentissage.

**5.** Procédé selon revendication 4, **caractérisé en ce qu'**il met à jour les possibilités de chaque émetteur étant réalisé par le F-automate d'apprentissage 4 en utilisant la formule:

$$p_i(n+1) = p_i(n) + f_R \sum_{j=1, j \neq i}^{a} g_j(p(n)) - f_P \sum_{j=1, j \neq i}^{a} h_j(p(n)), \qquad \text{si } \alpha(n)=\alpha_i$$

$$p_j(n+1) = p_j(n) - f_R \, g_j(p(n)) + f_P \, h_j(p(n)), \qquad \text{si } j \neq i$$

dans laquelle

a - désigne le nombre des actions au stade n,
$\alpha(n)$ - désigne l'ensemble des actions $\alpha(n)=\{\alpha_1, ...,\alpha_a\}$,
i, j - désigne l'index d'action,
$p_i(n)$ - désigne la probabilité de l'action $\alpha_i$ au stade n,
$p_j(n)$ - désigne la probabilité de l'action $\alpha_j$ au stade n,
$p_i(n+1)$ - désigne la probabilité de l'action $\alpha_i$ au stade n+1,
$p_j(n+1)$ - désigne la probabilité de l'action $\alpha_j$ au stade n+1,
$f_R$ - désigne le degré d'activation de récompense,
$f_P$ - désigne le degré d'activation de pénalité; la relation $f_R = 1- f_P$ ne doit pas être valable,
$g_j(p(n))$ - désigne la fonction de récompense pour l'action $\alpha_j$,
$h_j(p(n))$ - désigne la fonction de pénalité pour l'action $\alpha_j$.

**6.** Procédé selon revendication 4, dans lequel ladite adaptation dynamique desdites fonctions d'appartenance floues pour chaque appel réussi ou bloqué dudit automate d'apprentissage comprend les étapes suivantes:

- stockage de la qualité obtenue dans la fenêtre de qualité,
- vérification si la qualité obtenue est moins que la qualité actuelle minimale $q_{min}$, et l'attribution de la qualité à $q_{min}$ si c'est le cas,

- vérification si la qualité obtenue est plus grande que la qualité maximale actuelle $q_{max}$. et l'attribution de la qualité à $q_{max}$ si c'est le cas,
- recherche de la qualité minimale $q_{min}$ dans la fenêtre de qualité,
- recherche de la qualité maximale $q_{max}$ dans la fenêtre de qualité,
- adaptation de forme de ladite fonction d'appartenance floue de qualité à base de $q_{min}$ et $q_{max}$ obtenues,
- déplacement de la fenêtre de qualité d'un élément, c'est-à-dire, l'élément le plus ancien contenu dans la fenêtre de qualité est enlevé et tous les autres éléments sont déplacés pour une place en arrière,
- stockage du prix de la route dans la fenêtre de qualité si l'appel est réussi,
- copiage du prix de la route du dernier appel traité dans la fenêtre de prix si l'appel est bloqué,
- vérification si le prix obtenu est moins que le prix minimal actuel $p_{min}$, et l'attribution du prix obtenu à $p_{min}$ si c'est le cas,
- vérification si le prix obtenu est plus grand que le prix maximal actuel $p_{max}$, et l'attribution du prix obtenu à $p_{max}$ si c'est le cas,
- recherche du prix minimal $p_{min}$ dans la fenêtre de prix,
- recherche du prix maximal $p_{max}$ dans la fenêtre de prix,
- adaptation de forme desdites fonctions d'appartenance floues de prix à base de $p_{min}$ et $p_{max}$ obtenus,
- déplacement de la fenêtre de prix d'un élément, c'est-à-dire, l'élément le plus ancien contenu dans la fenêtre de prix est enlevé et tous les autres éléments sont déplacés pour une place en arrière.

**FIG. 1**

**FIG. 2**

**FIG. 3 (PRIOR ART)**

**FIG. 4**

**FIG. 5**

**FIG. 6**

FIG. 7

FIG. 8

START

Store obtained quality
in the quality window

quality $< q_{min}$ — NO

YES

$q_{min}$ = quality

quality $> q_{max}$ — NO

YES

$q_{max}$ = quality

Find $q_{min}$ and $q_{max}$ in
the quality window

Update fuzzy sets
$F_{Rq}$ and $F_{Pq}$

Move the quality
window for one element

END

*FIG. 9*

START

Call successful — NO → Copy the route price from the last processed call in the price window

YES ↓

Store the obtained route price in the price window

price < $p_{min}$ — NO →

YES ↓

$p_{min}$ = price

price > $p_{max}$ — NO →

YES ↓

$p_{max}$ = price

Find $p_{min}$ and $p_{max}$ in the price window

Update fuzzy sets $F_{Rp}$ and $F_{Pp}$

Move the price window for one element

END

**FIG. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Application of learning automata to telephone traffic routing problems. **K.S. NARENDRA ; S.S. TRIPATHI ; L.G. MASON.** Conn., Tech. Rep. CT-60. Yale Univ., New Haven, January 1974
- **NARENDRA K.S. et al.** Application of learning automata to telephone routing and control. *IEEE Transactions on Systems, Man and Cybernetics,* November 1977, vol. SMC-7 (11), 785-792

- **E. ABOELELA ; C. DOUGLIGERS.** Fuzzy Inference System for QoS Routing in B-ISDN. *IEEE Canadian Conference on Electrical and Computer Engineering,* May 1998, vol. 1 (24-28), 141-144
- **R.R. YAGER.** On weighted median aggregation. *International Journal of Uncertainty, Fuzziness and Knowledge-based Systems,* 1994, vol. 1, 101-113